# EUROPEAN PATENT APPLICATION

(11) **EP 1 857 691 A1**
(43) Date of publication of application: **21.11.2007**
(21) Application number: 06009919.9
(22) Date of filing: 15.05.2006
(51) Int. Cl.: F16B 23/00, B25B 15/00

(54) **Screw or bolt with a recess in their head and driver for engaging the recess**

(71) Applicant: Evert, Ole, 4300 Holbaek (DK)
(72) Inventor: Evert, Ole, 4300 Holbaek (DK)
(74) Representative: van Walstijn, Bartholomeus G. G.

(57) **Abstract**

A screw or bolt (1) with a recess (3) in a head (2) and a complimentary driver (20) for engaging the recess (3). The recess (3) comprises a plurality of lobes (4) flanked by driving flanges (5). Each flange (5) has an undercut portion (6). The floor (7) of the recess-lobes is inwardly inclined from their junctions with the top face (10) of the head (2) towards the longitudinal axis (X) of the screw or bolt (1). The complementary driver (20) has drive tip (23) with at least two drive elements (24). Each of the drive elements (24) is provided with a front face (27) and the front faces (27) are inclined from a point (29). The thickness of the portion (26) of the drive elements closest to the front faces (27) has an increasing thickness in the direction towards the front faces (27).

## Description

### FIELD OF THE INVENTION

The present invention relates to screws or bolts and drivers therefor, and particularly to the shape of the recess in the head of the screw or bolt and to the shape of the matching driver.

### BACKGROUND OF THE INVENTION

Traditionally, countersunk woodscrews are provided with a straight slot drive recess, but various forms of crossed slots, culminating in Phillips®, ACR Phillips II® and Pozidriv® forms of drive recess, have been developed.

However, whatever form of driver/recess is employed, an axial pressure is almost invariably required, a pressure, that increases with increasing torque applied in order to counter the tendency of drivers to "cam-out" of engagement with the screw recess. Craftsmen often have to work in difficult positions when fastening screws and as a result thereof have great difficulty in applying the required torque. Insufficient the pressure applied during fastening causes the driver to cam out and the resulting spin of the driver often damages the recess in the screw so that it becomes extremely difficult to remove or secure the damaged screw or bolt. Excessive pressure requirements reduce bit life and can cause worker fatigue or injury.

Furthermore, as screws get larger it is usually necessary to increase the dimensions of the recess so that greater torque can be transmitted. However, this usually involves a different and bigger driving tool. Changing drivers (bits) when fastening different sized screws is a time consuming and unrewarding activity that should be avoided if at all possible.

### OBJECT OF THE INVENTION

It is an object of the present invention to provide a screw or bolt, and driver therefor, wherein the screw or bolt has a recess form that reduces the tendency of the driver to cam-out when torque is applied. Moreover, the arrangement should have the capacity to permit several sizes of screws or bolts to be driven by the same driver.

### DISCLOSURE OF THE INVENTION

This object is achieved by providing a screw or bolt having a driving recess in a top face of its head, the recess comprising at least two recess-lobes preferably evenly spaced around a longitudinal axis of the screw, and driving flanges joining adjacent lobes, wherein the flange has an undercut portion, and the floor of the recess-lobes being inwardly inclined from their junctions with the top face towards the longitudinal axis.

The undercut portions of the flanges can be engaged by a complementary driver. The engagement between the driver and the recess substantially eliminates the need for applying pressure when applying torque is substantially eliminated. Further, the inclining floors towards the longitudinal axis allow the complementary driver to be pointed which facilitates centering and allows for one driver to match a plurality of different sized recesses and screws.

The flanges may have a portion extending substantially longitudinally from the top face towards the undercut portion. Thus, a recess with a shape relatively simple to produce is provided.

The transition from the longitudinally extending portion to the undercut portion can be a line or a strip that is disposed substantially parallel to the floor of the respective lobes.

Preferably, the screw or bolt has three of the recess-lobes.

The object above is also achieved by providing a driver comprising drive tip having at least two drive elements evenly spaced around a longitudinal axis of the driver, each of the drive elements being provided with a front face, the front faces being inclined from a point coincident with the longitudinal axis, characterized in that the thickness of at least the portion of the drive elements closest to the front faces has an increasing thickness in the direction towards the front faces.

The portions with the increase thickness have side faces with that are inclined and are able to engage the undercut portion of the recess of complementary screws or bolts, thereby positively locking the driver to the screw or bolt and substantially eliminating the need to apply and axial pressure when applying torque.

The drive elements may have a substantially constant thickness except for said portion closest to said front faces.

The transition between the inner portion of the drive elements that has a substantially constant thickness and the portion closest to the edge can be a line or strip that is disposed substantially parallel to said front faces.

Preferably, the width of the front faces of said drive elements is slightly less than the distance between oppositely disposed longitudinally extending portions of the flanges of the screw according to any of claims 2 to 4. Thus, the driver can be easily inserted in the recess.

Further objects, features, advantages and properties of the screw or bolt and driver according to the invention will become apparent from the detailed description.

### BRIEF DESCRIPTION OF THE DRAWINGS

In the following detailed portion of the present description, the invention will be explained in more detail with reference to the exemplary embodiments shown in the drawings, in which:
Figure 1 is a top view on a screw or bolt according to a preferred embodiment of the invention;
Figure 1A is a cross-sectional view of the screw or bolt according to figure 1 along the line A-A in figure 1;
Figure 1B is a cross-sectional view of the screw or bolt according to figure 1 along the line B-B in figure 1A;
Figures 2 to 4 are perspective views from different angles on a driver according to a preferred embodiment of the invention;
Figure 4A is a side view on the driver of figures 2 to 4,
Figures 5 to 7 illustrate the insertion and engagement of the driver of figure 2 in/with the screw or bold of figure 1; and
Figure 8 illustrates how one large driver according to a preferred embodiment of the invention fits both small and large screws or bolts according to the invention.

### DETAILED DESCRIPTION OF PREFERRED EMBODIMENTS

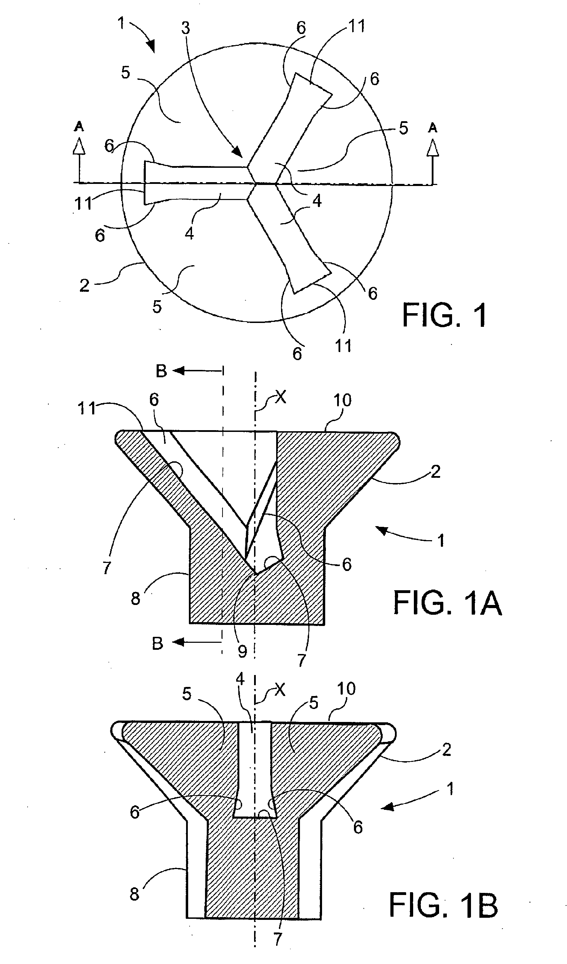

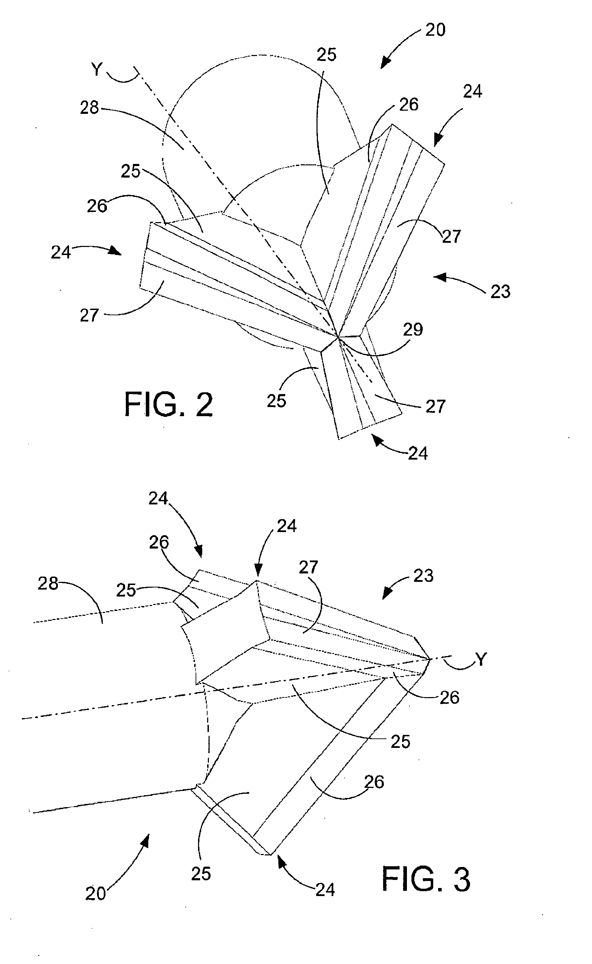

Figure 1 is a top view on a screw or bolt 1 according to a preferred embodiment of the invention. Figure 1A shows the same screw or bolt 1 in cross-section along the line A-A in figure 1. Figure 1B shows the same screw or bolt 1 in cross-section along the line B-B in figure 2. The screw or bolt 1 includes a threaded shank 8 and a countersunk head 2. Only the portion of the threaded shank 8 closest to the head 2 is shown in the drawings. It is however understood that the threaded shank 8 can be provided with a tapered body for use as a wood screw or the like or with a straight body for use as a bolt or the like.

The head 2 is provided in its top face 10 with a driving recess 3. The driving recess 3 comprises three lobes 4 centered on a longitudinal axis X and evenly spaced around the longitudinal axis of the screw 1. Driving flanges 5 join adjacent lobes 4. The flanges 5 have an undercut portion 6.

The flanges have a portion extending substantially longitudinally from the top face 10 towards the undercut portion 6. The engagement surfaces of the undercut portion 6 are disposed at an angle with the engagement surfaces of the longitudinally extending portion for creating the undercut. In the present embodiment there is a sharp transition between the two portions. However, there could just as well be a smooth transition between the two portions.

Each of the recess-lobes 4 is provided with a floor 7 which is flat that is inwardly inclined from respective junctions 11 between the recess-lobes 3 and the top face 10, and inwardly and downwardly towards the longitudinal axis X where the floors 7 of each of the recess-lobes 4meet in the bottom point 29 coincident with axis X. The undercut portions 6 adjoin the floors 7. The floors 7 are flat, but according to an alternative embodiment (not shown) the can be grooved. The floors 7 taper from the junctions 11 towards the bottom 9 at a slight angle with the narrowest portion of the font faces 7 being at the bottom 9 where the three floors 7 intersect at the longitudinal axis X.

The transition from the longitudinally extending portion to the undercut portion 6 is a line or a strip that is preferably disposed extending parallel to the floor 7 of the respective lobes 4.

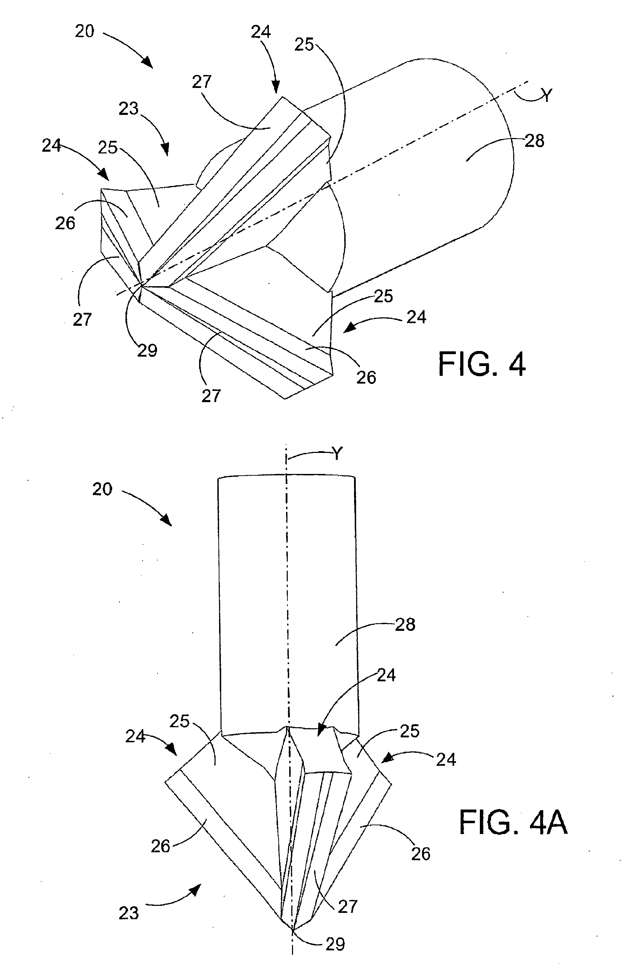

Turning now to Figs. 2, 3 and 4 and 4A, a driver 20 is shown having a round shank 28 (according to another not shown embodiment the shank could be a hexagonal section shank for fitting in a conventional socket to rotationally drive the driver 21 about its longitudinal Y axis).

On the end of the shank 28 is a driving tip 23. The driving tip 23 comprises three drive elements 24 evenly spaced around a longitudinal axis (Y) of the driver 20. Each of said drive elements 24 is provided with a front face 27. The front face is divided into two pointed surfaces to facilitate entry of the tip 23 into a driving recess. However, according to another embodiment (not shown) the front faces may also be flat.

The front faces 7 are inclined from the side of the driving tip 23 to a point 29 coincident with the longitudinal axis Y. The front faces 7 taper from the side of the driving tip 23 towards the point 29, with an angle that is substantially identical to the angle at which the floors 7 taper towards the bottom 9.

The drive elements 24 include a portion 25 with a substantially even thickness and a tapered portion 26 that with a thickness that increases towards the front faces 27, i.e. the drive elements widen in a peripheral strip along the front surface. Thus, it is the area of the drive elements 24 closest to the front faces 27 has the highest width (extension in the tangential direction).

The portion 25 may slightly widen (increase thickness) in the direction towards the longitudinal axis.

The driving tip 23 is shaped to fit the recess 3 of the screw or bolt 1 so as to transmit drive from the driver 20 to the screw or bolt 1. Since the shape of the driver 20 and driving recess is rotationally symmetrical, drive can be transmitted in either direction.

Both the driving recess 3 and driving tip 23 diminish in size with a cone angle of about 50 degrees, although shaper angles of approximately 45 degrees or sharper angles of approximately 60 degrees are possible.

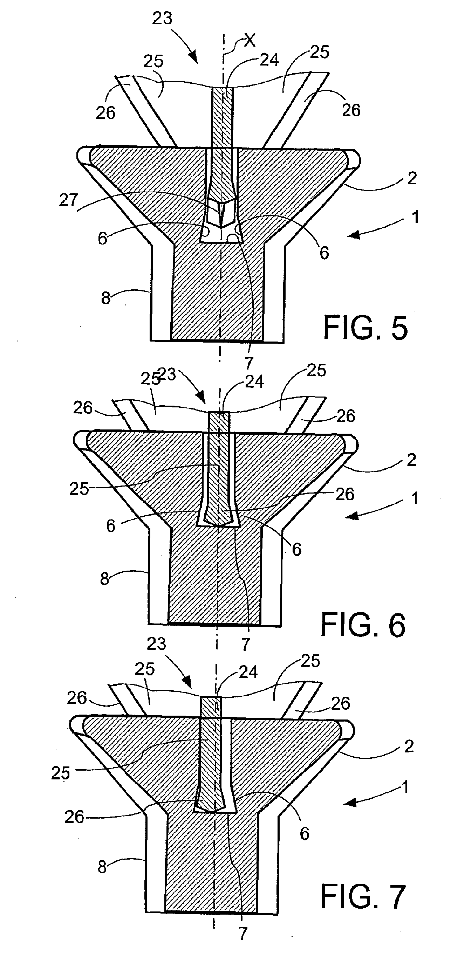

Turning now to figures 5 through 7, the insertion of the driving tip 23 into the driving recess 3 is illustrated. Figures 5 and 6 show how the driver 20 is inserted into the driving recess 3. The thickness of the widened portion 26 is at a given radial distance from the longitudinal axis Y less than the tangential distance between the opposing engagement surfaces of the driving lobes 4 at the same given radial distance from the longitudinal axis X.

Figure 7 shows how the widened portion 26 of the drive member 24 engages to the undercut portion 6 of the driving recess 3 when torque is applied to the driver 20. By virtue of the undercut portion 6 in the driving recess 3 and the widening portion 26 on the drive members 24, a positive locking effect of the driver 20 relative to the screw or bold 1 is obtained, i.e. the more torque is applied the stronger the engagement between the driver 20 and the screw or bolt 1 becomes (positive lock). Thus, camming out of the driver 20 can be prevented without an operator applying axial pressure to the driver 20.

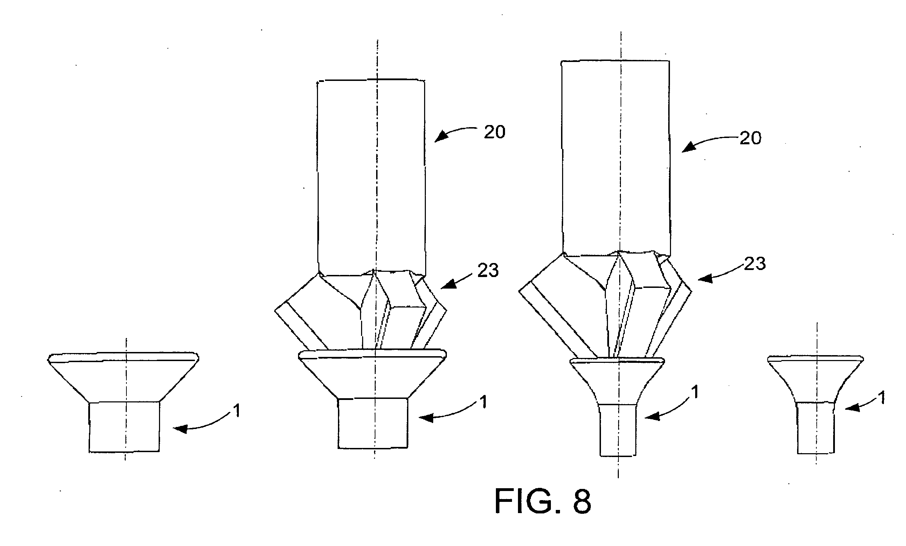

Figure 8 shows how the driver perfectly fits in the driving recess of the various size screws or bolts. This is due to the fact that the width of the front surfaces 27 increases from point 29 towards the edges of the drive tip 23. The width of the floors 7 increases from bottom 9 towards the junctions 11 in a corresponding fashion. Changing drivers (bits) when fastening different sized screws or bolts can thus be avoided.

The recess 3 in the head 2 can be created by punching the lobes 4 one by one at an angle with the top surface 5 of equal to the angle of the floor 11 with the top surface. With a suitable shaped punching tool (not shown) the undercut one lobe 4 including its undercut portion can be created in one punch. The driver 20 can be manufactured with machining techniques such as grinding or filing.

The term "comprising" as used in the claims does not exclude other elements or steps. The term "a" or "an" as used in the claims does not exclude a plurality.

The reference signs used in the claims shall not be construed as limiting the scope.

Although the present invention has been described in detail for purpose of illustration, it is understood that such detail is solely for that purpose, and variations can be made therein by those skilled in the art without departing from the scope of the invention.

## Claims

1. A screw or bolt (1) having a driving recess (3) in a top face of its head (2), the recess comprising at least two recess-lobes (4) preferably evenly spaced around a longitudinal axis (X) of the screw (1), and driving flanges (5) joining adjacent lobes, wherein the flanges (5) have an undercut portion (6), and the floor of said recess-lobes (7) being inwardly inclined from their junctions (9) with said top face (10) towards said longitudinal axis (X).

2. A screw or bolt according to claim 1, wherein the flanges (5) have a portion extending substantially longitudinally from the top face (10) towards the undercut portion (6).

3. A screw or bolt according to claim 2, wherein the transition from the longitudinally extending portion to the undercut portion (6) is a line or a strip that is disposed substantially parallel to the floor (7) of the respective lobes (4).

4. A screw or bolt according to claim 3, having three of said recess-lobes (4).

5. A driver (20) having a drive tip (23) to fit the recess (3) of a screw (2) as defined in claim any of claims 1 to 4.

6. A driver (20) comprising drive tip (23) having at least two drive elements (24) evenly spaced around a longitudinal axis (Y) of the driver (20), each of said drive elements (24) being provided with a front face (27), said front faces being inclined from a point (29) coincident with said longitudinal axis, **characterized in that** the thickness of at least the portion (26) of the drive elements closest to said front faces has an increasing thickness in the direction towards said front faces (27).

7. A driver (20) according to claim 6, wherein said drive elements (24) have a substantially constant thickness except for said portion (26) closest to said front faces.

8. A driver (20) according to claim 6 or 7, wherein the transition between the inner portion (25) of the drive elements that has a substantially constant thickness and the portion (26) closest to the front face is a line or strip that is disposed substantially parallel to said front faces.

9. A driver according to claim 8, wherein the width of the front faces (27) of said drive elements is slightly less than the distance between oppositely disposed longitudinally extending portions of the flanges (25) of the screw (1) according to any of claims 1 to 4.
